# EUROPÄISCHE PATENTSCHRIFT

(11) **EP 2 034 204 B1**
(45) Veröffentlichungstag und Bekanntmachung des Hinweises auf die Patenterteilung: **06.03.2013**
(21) Anmeldenummer: 08013900.9
(22) Anmeldetag: 04.08.2008
(51) Int. Cl.: F16D 13/64

(54) **Verfahren zum Aufbringen eines Reibbelags mittels Siebdruckverfahrens**
Method for applying a friction covering with a screen printing procedure
Procédé d'application d'une garniture de friction à l'aide d'un procédé de sérigraphie

(30) Priorität: 30.08.2007 DE 102007040965
(43) Veröffentlichungstag der Anmeldung: 11.03.2009
(73) Patentinhaber: Schaeffler Technologies AG & Co. KG, 91074 Herzogenaurach (DE)
(72) Erfinder: Wiaterek, Christian, 51519 Odenthal (DE)

(56) Entgegenhaltungen:
- EP-A1- 1 024 310
- EP-A2- 0 201 813
- DE-A1- 19 650 451
- DE-C1- 4 334 207
- FR-A- 1 546 163
- US-A- 2 790 206
- US-A- 5 413 194

## Beschreibung

Die vorliegende Erfindung betrifft ein Verfahren mit den Merkmalen gemäß dem Oberbegriff des Anspruchs 1.

Das Dokument FR 1546 163 A offenbart ein Verfahren, wonach mittels einer Presse eine Reibbelagmasse auf einen Reibbelagträger gepresst wird, und dabei die, dem Träger abgewandte Seite der Reibbelagmasse, zusätzlich mit Nuten mittels eines Gegenpresselements versehen wird.

Für Kupplungen, insbesondere für Nasskupplungen, werden im Stand der Technik Lamellenträger verwendet, auf die einseitig oder beidseitig ein Reibbelag aufgetragen wird. Dazu wird die Reibbelagmasse auf den metallischen Lamellenträger warm oder heiß aufgepresst, so dass die Reibbelagmasse an dem Lamellenträger haften bleibt. Anschließend wird das in der Reibbelagmasse vorhandene Bindemittel in einem Ofen ausgehärtet, so dass der Reibbelag seine gewünschte Härte erhält.

Wird jedoch nur eine dünne Reibbelagschicht von einem Millimeter oder weniger gewünscht, so sind die Materialeinwaagen so gering, dass sich beim Warm- oder Heißpressen Materialverteilungsprobleme ergeben und der aufgebrachte Reibbelag häufig fehlerhaft ist.

Hinzu kommt, dass bei Nasskupplungen die gewünschte Reibbelagoberfläche Strukturen aufweisen soll, die es später beim Betrieb der Kupplung erlauben Öl durch diese Strukturen an der Reiboberfläche entlang zu leiten.

Aufgabe der Erfindung ist es ein Verfahren bereitzustellen, dass es ermöglicht einen dünnen Reibbelag herzustellen, sowie so hergestellte Reibbeläge und Lamellenträger.

Gelöst wird diese Aufgabe durch ein Verfahren nach dem unabhängigen Anspruch 1.

Bevorzugte Ausführungsformen finden sich in den Unteransprüchen.

Insbesondere wird die Aufgabe gelöst durch ein Verfahren zum Aufbringen eines Reibbelags, insbesondere für eine Nasskupplung, mit folgenden Schritten:
(a) Lösen eines Harzes in einem Lösungsmittel um eine Reibbelagmasse herzustellen,
(b) Anbringen einer Füllform auf einer Trägerfläche, auf welche die Reibbelagmasse aufgetragen werden soll,
(c) Aufbringen der Reibbelagmasse mittels der Füllform,
(d) Entfernen der Füllform,
(e) Trocknen der Reibbelagmasse,
(f) Aushärten der Reibbelagmasse,
wobei in Schritt (a) zusätzlich ein Thixothropiermittel hinzugefügt wird und in Schritt (e) das Trocknen der Reibbelagmasse nach dem Entfernen der Füllform erfolgt.

Durch das Verwenden einer Füllform zum Aufbringen der Reibbelagsmasse, ähnlich wie bei einem Siebdruckverfahren, können geringe Mengen an Material kontrolliert auf dem Trägermaterial appliziert werden, ohne dass es zu Materialverschiebungen und so zu Verteilungsproblemen aufgrund von geringen Materialeinwaagen kommt. Auch kann durch dieses Verfahren die Struktur des Reibbelags vorher festgelegt werden und so Strukturen auf dem Reibbelag erzeugt werden, die beim Endprodukt einen optimalen Ölfluss gewährleistet. So können Reibbelagstrukturen hergestellt werden, die eine Dicke von unter einem Zentimeter, bevorzugt unter einem Millimeter und insbesondere bevorzugt von ca. 0,75 mm aufweisen.

Die Füllform kann dabei ein grobmaschiger Siebrahmen sein. Das Sieb kann dabei Maschenweiten von mehreren Millimetern aufweisen, bevorzugt 1 bis 10 mm, insbesondere bevorzugt 4 mm.

Das Harz kann sowohl ein einzelnes Harz, als auch ein Harzgemisch sein.

Das Lösungsmittel, in dem das Harz gelöst wird kann ein einzelnes Lösungsmittel, wie z.B. Ethanol oder andere gebräuchliche Lösungsmittel sein, jedoch auch ein Lösungsmittelgemisch aus verschiedenen Lösungsmitteln.

Das Lösungsmittel umfasst bevorzugt mindestens ein Lösungsmittel mit einem hohen Siedepunkt, einen Hochsieder und mindestens ein Lösungsmittel mit einem niedrigen Siedepunkt, einen Niedrigsieder. Der Hochsieder weist dabei bevorzugt einen Siedepunkt über 100°C, insbesondere über 110°C, der Niedrigsieder einen Siedepunkt unter 100°C, insbesondere unter 90°C auf.

Die Mischung aus Lösungsmitteln mit verschiedenen Siedepunkten kann es ermöglichen, dass die Reibbelagmasse auf dem Trägermaterial geordnet abtrocknet.

Die Wahl der Lösungsmittel kann dabei von der Wahl des für den Reibbelag verwendeten Harzes bzw. des Harzgemisches abhängen. So wird zur Lösung von polaren Harzen bevorzugt ein polares Lösungsmittel, für die Lösung von unpolaren Harzen ein unpolares Lösungsmittel verwendet.

Ein weiteres Kriterium für die Auswahl der Lösungsmittel kann die Gefahrenstoffklasse sein, in die das Lösungsmittel klassifiziert ist. So sind in der Regel Lösungsmittel bevorzugt, von denen keine Gefahr für die Umgebung ausgehen.

Bevorzugt kann das auf dem Trägermaterial aufgebrachte Reibflächenmaterial bei Raumtemperatur oder unter Zugabe von geringer bis moderater Energie getrocknet werden. In diesem Stadium kann der Füllform schon entfernt sein, so dass die Reibbelagmasse gleichmäßiger trocknet, bzw. die Füllform sich nicht mit dem Reibbelag verbindet.

Bevorzugt umfasst das Verfahren einen Aushärteprozess mittels UV-Strahlung. Die Aushärtung mittels UV-Strahlung ermöglicht relativ schnell eine formbeständige Reibfläche auf dem Trägermaterial, so dass die Reibflächenmasse während des Aushärtens bei höheren Temperaturen nicht zerfließt und so die gewünschte Form verliert.

Grundsätzlich sind duroplastische Pulverharze für das erfindungsgemäße Verfahren geeignet, jedoch sind auch lösungsmittelfreie Flüssigsysteme oder 2-Komponentensysteme als Harze geeignet. Insbesondere letztere können UV-induziert aushärten und so die Reibbelagmischung strukturell stabilisieren, so dass die Reibbelagmischung während des Trocknens oder des Aushärtens im Ofen nicht zerfließt und so zu einer unerwünschten Form führt.

Die vorliegende Erfindung wird im Weiteren mittels einer bevorzugten Ausführungsform unter Bezugnahme mehrerer Zeichnungen beschrieben.

In den Zeichnungen zeigt
Figur 1 eine schematische Darstellung eines erfindungsgemäß hergestellten Werkstücks,

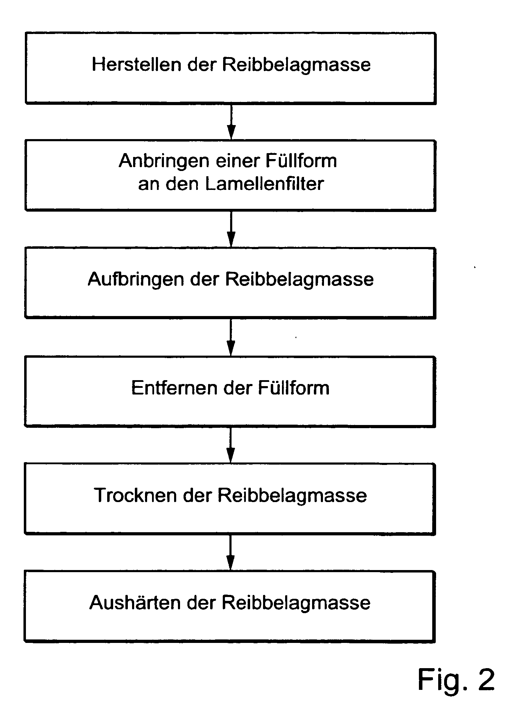

Figur 2 zeigt ein Verfahrensdiagramm für diese Herstellung.

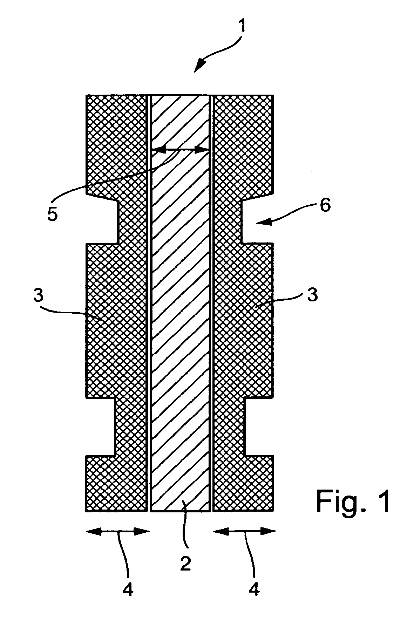

Mit den erfindungsgemäßen Verfahren wird ein Werkstück 1 (siehe Figur 1) für eine Nasskupplung zur Verwendung in einem Kraftfahrzeug hergestellt, das einen metallischen Lamellenträger 2 umfasst und an beiden Flächen des Lamellenträgers 2 Reibbeläge 3. Der Lamellenträger weist dabei eine Stärke 5 von 2,5 mm auf, die Reibbeläge eine maximale Stärke 4 von 0,75 mm.

Die Reibbeläge 3 weisen Strukturen 6 auf, durch die beim Betrieb der Nasskupplung ein Ölfluss gewährleistet, der auch dazu beiträgt, dass die Kupplung gekühlt wird.

In einem ersten Schritt wird eine hochviskose, thixothrophe Masse als Reibblagmasse hergestellt. Dazu wird ein Pulverharz in einem geeigneten Lösungsmittelgemisch gelöst.

Um ein kontrolliertes Abtrocknen zu gewährleisten umfasst das Lösungsmittelgemisch mindestens ein Lösungsmittel mit einem niedrigen Siedepunkt und ein Lösungsmittel mit einem hohen Siedepunkt. Ein solches Lösungsmittelgemisch ist ein Gemisch aus Methylethylketon (MEK, Butanon-2) und Ethoxypropylacetat (EPA). Dies kann in einem Verhältnis 19:43 % gemischt werden . Weiter werden 38% Feststoffe insbesondere Bindemittel dazugegeben.

Ebenso möglich ist anstatt der Verwendung von duroplastischen Pulverharzen in Kombination mit Lösungsmitteln, die Verwendung von lösungsmittelfreien Flüssigsystemen und/oder von 2-Komponenetensystemen, die durch UV-Strahlung aushärten.

Dabei ist besonders bevorzugt, ein duroplastisches Pulverharz mit einem UV-härtenden 2-Komponentensystem zu kombinieren. Dadurch wird die Formbeständigkeit des Reibbelags durch die Aushärtung mittels UV-Strahlung hervorgerufen, so dass die aufgetragenen Reibbelagmassen nicht bei der Entfernung der Füllform oder danach zerfließen und zum Beispiel die Strukturen an der Oberfläche bestehen bleiben.

Das duroplastische Pulverharz härtet erst durch das Aushärten im Ofen aus und garantiert damit die für Reibmaterialien bekannte thermische Stabilität.

Zum Andicken der Masse wird Thixothropiermittel hinzugefügt, um ein Wegfließen der Masse vor, während und nach dem Trocknen zu verhindern. Auch werden Zusatzstoffe zur Verminderung der Oberflächenspannung der Reibbelagmasse der Reibbelagmasse zugesetzt.

Weiter wird eine Füllform auf den Lamellenträger 2 aufgebracht. Die Dicke der durch die Füllform aufgebrachten Reibschicht wird durch die Dicke der Füllform definiert, analog zum Siebdruckverfahren. Dabei muss jedoch bei der Berechnung und Konstruktion bzw. Auswahl der Füllform berücksichtigt werden, dass die aufgebrachte Reibbelagmasse durch das Trocknen und Aushärten schrumpft.

Durch diese Füllform, ein grobmaschiger Siebrahmen, wird das Reibmaterial auf die den Lamellenträger aufgebracht. Durch die groben Maschen können auch Strukturen auf der Oberfläche des Reibbelags hergestellt werden, z.B. indem einzelne Maschen verschieden dick sind, bzw. abgedeckt werden. Einerseits können die Maschen so vorbehandelt sein, dass jene Maschen bildenden Stege verhindern, dass an der Stelle, an der sich die Stege befinden Reibbelagmasse auf den Lamellenträger aufgebracht wird. Dies führt zu Vertiefungen in dem späteren Reibbelag. Auch kann durch spezielle Abdeckungen, welche die Maschen des Siebs bedecken, ein lokaler Auftrag auf den Lamellenträger verhindert werden.

Nach dem Aufbringen des Reibbelagmaterials wird die Füllform entfernt und der Reibbelag auf dem Lamellenträger unter Einwirkung von UV und/der moderater Energie in Form von Wärme getrocknet. Die als Wärme zugeführte Energie kann dabei mittels auf zwischen Zimmertemperatur und 100°C , insbesondere unter 50°C aufgewärmter Luft an den Reibbelag zugeführt werden.

Analog wird ein ähnlicher Reibbelag auf der anderen Seite des Lamellenträgers aufgebracht.

Anschließend wird der Lamellenträger zusammen mit den zwei Reibbelägen einem Ofenprozess unterworfen, bei dem die Reibbeläge unter höherer Energie in Form von Wärme z.B bei 150°C bis 250°C, insbesondere 200°C aushärten. Dieses Aushärten ist dabei eine Reaktion der Bindemittel, die sich in der Reibbelagmasse befinden. Bei der Wahl der pulverförmigen Bindemittel sind dabei Bindemittel bevorzugt, die möglichst wenig Fluss aufweisen und eine kurze Bindezeit haben.

### Bezugszeichenliste

- 1.: Werkstück
- 2.: Lamellenträger
- 3.: Reibbelag
- 4.: Dicke des Lamellenträgers
- 5.: Dicke der Reibbeläge
- 6.: Struktur auf dem Reibbelag

## Patentansprüche

1. Verfahren zum Aufbringen eines Reibbelags auf einen Reibbelagträger, insbesondere für eine Nasskupplung, umfassend folgende Schritte:
(a) Lösen eines Harzes in einem Lösungsmittel, um eine Reibbelagmasse herzustellen
(b) Anbringen einer Füllform auf einer Trägerfläche, auf die die Reibbelagmasse aufgetragen werden soll,
(c) Aufbringen der Reibbelagmasse mittels der Füllform,
(d) Entfernen der Füllform,
(e) Trocknen der Reibbelagmasse,
(f) Aushärten der Reibbelagmasse,
**dadurch gekennzeichnet, dass** in Schritt (a) zusätzlich ein Thixothropiermittel hinzugefügt wird und in Schritt (e) das Trocknen der Reibbelagmasse nach dem Entfernen der Füllform erfolgt.

2. Verfahren nach dem vorhergehenden Anspruch, **dadurch gekennzeichnet, dass** das Lösungsmittel einen Hochsieder und einen Niedrigsieder umfasst.

3. Verfahren nach dem vorhergehenden Anspruch 1, **dadurch gekennzeichnet, dass** das Trocknen bei einer moderaten Energiezufuhr vor sich geht.

4. Verfahren nach einem der vorhergehenden Ansprüche, **dadurch gekennzeichnet, dass** das Verfahren einen Aushärteprozess mittels UV-Strahlung umfasst.

5. Verfahren nach dem vorhergehenden Anspruch, **dadurch gekennzeichnet, dass** die Reibbelagmasse eine UV-härtende Substanz umfasst.

6. Verfahren nach dem vorhergehenden Anspruch, **dadurch gekennzeichnet, dass** die Reibbelagmasse ein UV-härtendes 2-Komponentensystem umfasst.

7. Verfahren nach einem der vorhergehenden Ansprüche, **dadurch gekennzeichnet, dass** die Temperatur beim Aushärten größer ist als beim Trocknen.

8. Verfahren nach einem der vorhergehenden Ansprüche, **dadurch gekennzeichnet, dass** die Trägerfläche ein Lamellenträger ist.

9. Verfahren nach einem der vorhergehenden Ansprüche, **dadurch gekennzeichnet, dass** der Reibbelagträger eine Lamellenträger ist.

## Claims

1. Method for applying a friction lining to a friction lining carrier, in particular for a wet clutch, comprising the following steps:
(a) dissolving a resin in a solvent in order to produce a friction lining mass,
(b) fitting a filling mould on a carrier surface to which the friction lining mass is to be applied,
(c) applying the friction lining mass by means of the filling mould,
(d) removing the filling mould,
(e) drying the friction lining mass,
(f) curing the friction lining mass,
**characterized in that**, in step (a), a thixotropic agent is additionally added, and, in step (e), the friction lining mass is dried after the filling mould has been removed.

2. Method according to the preceding claim, **characterized in that** the solvent comprises a high boiler and a low boiler.

3. Method according to the preceding Claim 1, **characterized in that** the drying takes place with a moderate supply of energy.

4. Method according to one of the preceding claims, **characterized in that** the method comprises a curing process by means of UV radiation.

5. Method according to the preceding claim, **characterized in that** the friction lining mass comprises a UV-curing substance.

6. Method according to the preceding claim, **characterized in that** the friction lining mass comprises a UV-curing 2-component system.

7. Method according to one of the preceding claims, **characterized in that** the temperature is higher during the curing than during the drying.

8. Method according to one of the preceding claims, **characterized in that** the carrier surface is a plate carrier.

9. Method according to one of the preceding claims, **characterized in that** the friction lining carrier is a plate carrier.

## Revendications

1. Procédé d'application d'une couche de frottement sur un support de couche de frottement, en particulier pour un embrayage à liquide, le procédé comportant les étapes suivantes :
(a) dissolution d'une résine dans un solvant pour préparer une pâte de couche de frottement,
(b) application d'un moule de charge sur une surface de support sur laquelle la pâte de couche de frottement doit être appliquée,
(c) application de la pâte de couche de frottement au moyen du moule de charge,
(d) enlèvement du moule de charge,
(e) séchage de la pâte de couche de frottement,
(f) durcissement de la pâte de couche de frottement,
**caractérisé en ce que**
à l'étape (a), on ajoute en supplément un agent thixotrope et
**en ce qu'**à l'étape (e), le séchage de la pâte de couche de frottement s'effectue après l'enlèvement du moule de charge.

2. Procédé selon la revendication précédente, **caractérisé en ce que** le solvant comporte une substance volatile et une substance peu volatile.

3. Procédé selon la revendication 1 qui précède, **caractérisé en ce que** le séchage s'effectue par un apport modéré d'énergie.

4. Procédé selon l'une des revendications précédentes, **caractérisé en ce que** le procédé comporte une opération de durcissement par rayonnement UV.

5. Procédé selon l'une des revendications précédentes, **caractérisé en ce que** la pâte de couche de frottement comporte une substance durcissant aux UV.

6. Procédé selon l'une des revendications précédentes, **caractérisé en ce que** la pâte de couche de frottement comporte un système à deux composants durcissant aux UV.

7. Procédé selon l'une des revendications précédentes, **caractérisé en ce que** la température du durcissement est supérieure à celle du séchage.

8. Procédé selon l'une des revendications précédentes, **caractérisé en ce que** la surface de support est un support en lamelles.

9. Procédé selon l'une des revendications précédentes, **caractérisé en ce que** le support de la couche de frottement est un support en lamelles.
